## Europäisches Patentamt

## European Patent Office

## Office européen des brevets

(11) Numéro de publication: **0 025 725**
**A2**

(12) ## DEMANDE DE BREVET EUROPEEN

(21) Numéro de dépôt: **80400972.8**

(22) Date de dépôt: **27.06.80**

(51) Int. Cl.³: **H 02 M 3/315, G 08 B 17/06**

---

(30) Priorité: **29.06.79 CH 6106/79**

(43) Date de publication de la demande: **25.03.81**
**Bulletin 81/12**

(84) Etats contractants désignés: **AT BE DE FR GB IT NL SE**

(71) Demandeur: **Payot, Jocelyne, 30, rue Arc-en-Ciel, CH-2300 La Chaux-de-Fonds (CH)**

(72) Inventeur: **Grudzinski Richard, 30, Rue Arc-en-Ciel, CH-2300 La Chaux-de-Fonds (CH)**

(74) Mandataire: **Corre, Jacques et al, Cabinet Regimbeau 26, Avenue Kléber, F-75116 Paris (FR)**

---

(54) **Dispositif électronique pour l'utilisation d'une source de très faible tension et application à un détecteur-émetteur d'incendie.**

(57) Pour résoudre les problèmes relatifs à la difficulté de procéder à l'entretien de capteurs disposés à différents endroits peu accessibles et/ou répartis en de très nombreux points d'un espace, le dispositif électronique comprend un agencement qui permet d'alimenter un émetteur (E) d'une façon autonome à partir du capteur (TC). Cet agencement comprend au moins un transistor (T21, T22, T23) et un transformateur (26), dont le primaire à faible nombre de spires, est en série avec le tronçon commandé du transistor. Le secondaire du transformateur, à plus grand nombre de spires, agit sur l'électrode de commande du transistor et la très faible tension est appliquée sur le tronçon commandé du transistor en série avec le primaire du transformateur. Des tensions de quelques mV ainsi appliquées provoquent déjà l'apparition, aux bornes de l'enroulement secondaire, d'impulsions de tension d'un ordre de grandeur utilisable, lesquelles peuvent accumuler de l'énergie sur un condensateur (25) alimentant l'émetteur (E) par intermittence.

Ce dispositif trouve une application particulièrement intéressante pour la réalisation d'un détecteur-émetteur autonome pour télé-alarme d'incendie.

TITRE MODIFIÉ
voir page de garde

Dispositif électronique pour rendre utilisable de façon
autonome une source de très faible tension, utilisation
de ce dispositif pour réaliser une unité détectrice-
émettrice autonome de télé-alarme incendie, unité formant
un détecteur - émetteur autonome de télé-alarme incendie
correspondant à cette utilisation

La présente invention concerne un dispositif
électronique pour rendre utilisable de façon autonome une
source de très faible tension, elle concerne également
l'utilisation de ce dispositif pour réaliser une unité
détectrice-émettrice autonome de télé-alarme incendie,
et elle concerne encore une unité formant un détecteur-
émetteur autonome de télé-alarme incendie correspondant
à cette utilisation.

La technique actuelle connaît un grand nombre
d'organes divers, source d'une très faible tension électrique. On peut citer à titre d'exemple les thermo-couples (lorsqu'ils sont soumis à une différence de température relativement basse, de l'ordre de 50 à 100°C) les
microphones, certains capteurs ou sondes électromécaniques ou électro-magnéto-mécaniques, certaines cellules
photo-électriques, etc... Les tensions produites par
ces organes ou capteurs sont en général utilisées comme
signal à l'entrée d'appareils électroniques divers, et, en tant que signal d'entrée ou de commande d'un tel dispositif, ces très faibles tensions sont amplement suffisantes, puisque l'on connaît des appareils électriques capables de réagir à la présence, sur leur entrée, d'une tension de l'ordre de quelques microvolts. Ces appareils détectant des très faibles tensions, sont toujours munis d'une source d'alimentation en énergie électrique, pile, accumulateur, raccordement au réseau,... Pour certaines utilisations où de très petites puissances d'alimentation sont déjà suffisantes, les capteurs à très basse tension eux-mêmes, qui ont en général une très faible impédance interne et sont donc aptes à délivrer un courant non négligeable, seraient aptes à délivrer la puissance d'alimentation voulue, considérée uniquement du point de vue du bilan énergétique. Cela a pu être réalisé - tout au moins en laboratoire - lorsque les très faibles tensions produites sont des tensions alternatives, comme par exemple le signal de sortie d'un microphone, par contre, lorsque la très faible tension est une tension continue, comme par exemple celle qui est produite par un thermo-couple, l'utilisation de l'énergie correspondante en tant qu'énergie d'alimentation d'un appareil n'a jusqu'à maintenant pas été possible étant donné le très bas niveau de tension. On connaît, il est vrai, des élévateurs de tension continue, qui élèvent par exemple la tension continue d'approximativement 1,5 V d'une pile à une valeur de 3 ou 4,5 V. Pour qu'un tel agencement puisse fonctionner, il fallait toutefois toujours, jusqu'à maintenant, que la plus basse tension, c'est-à-dire celle que l'on voulait élever, ait déjà l'ordre de grandeur voulue pour servir de tension d'alimentation à un appareillage ou montage électronique. Or, cette tension minimum d'alimentation d'un appareil apte à fonctionner se situe à approximativement 1 V, compte tenu du fait que tous les éléments actifs que l'on connaît pour équiper les appareils électroniques du genre en question
présentent des tensions de seuil voisines de 1 V qui interdisent un fonctionnement sous une tension d'alimentation notablement plus basse que 1 V. En conséquence,
des sources de tension continue de quelques millivolts,
(ne dépassant pas 100 ou 200 millivolts) n'avaient jamais
pu être utilisées comme source d'énergie apte à rendre
un appareil électrique autonome, c'est-à-dire apte à
dispenser cet appareil de la présence d'une source d'énergie particulière (pile, accumulateur, réseau, etc). Ces
sources de très basse tension continue étaient donc utilisées simplement en tant que source de signal, et les
appareillages qui les traitaient devaient être munis de
leur propre source d'énergie.

Cette situation constitue un très grave inconvénient lorsque, pour pouvoir être efficacement utilisés,
des capteurs délivrant une très basse tension continue,
comme par exemple des thermo-couples aptes à constituer
des détecteurs d'alarme incendie, devaient être installés
en un très grand nombre, répartis au sein d'un grand espace, en des endroits souvent très difficilement accessibles. En effet, dans un tel cas, de grandes difficultés
étaient rencontrées pour le contrôle, l'entretien et le
cas échéant l'échange des piles ou accumulateurs alimentant en énergie chacun des dispositifs comprenant un capteur de cette sorte.

Dans la lutte contre les incendies de forêts,
par exemple, la détection précoce des foyers d'incendie,
seule mesure permettant une lutte efficace
contre les incendies d'envergure, n'est possible que
moyennant la disposition d'un capteur - typiquement un
thermo-couple - en un très grand nombre d'endroits de la
forêt à protéger: aucun endroit de la forêt ne devrait
être distant de plus de quelques vingt à trente mètres,
voire cinquante mètres, d'un capteur-détecteur de début
d'incendie, pour que la détection immédiate des incendies naissant puisse être assurée. Dans de grandes forêts
s'étendant par exemple sur plusieurs dizaines de kilomètres carrés, ceci postule la présence de milliers de
détecteurs dont la nécessité d'entretien, due principalement à l'utilisation d'une pile, augmente énormément le
coût et la complexité d'organisation, jusqu'à les rendre
quasiment prohibitifs.

La possibilité d'utiliser, dans des cas de ce
genre, des agencements détecteurs alimentés par l'énergie
même que délivre leur élément-capteur, à l'exclusion de
toute autre source d'énergie, rendrait donc de très appréciables services dans tous les nombreux domaines nécessitant une surveillance répartie, et notamment dans le
domaine de la prévention des incendies de forêts.

La présente invention vise à apporter une solution avantageuse aux problèmes qui viennent d'être évoqués et son but et en particulier de fournir, d'une façon simple et avantageuse, un dispositif électronique
pour rendre utilisable de façon autonome une source de
faible tension, ce but étant également de fournir les
éléments voulus pour permettre une utilisation de ce dispositif dans la réalisation d'une unité détectrice-émettrice autonome de télé-alarme incendie, et ce but étant
de plus aussi de fournir une unité formant un détecteur
émetteur autonome de télé-alarme incendie qui soit d'une
construction avantageuse et simple tout en étant apte
à fournir, avec des frais d'entretien quasi insignifiants,
les services techniques de haute fiabilité que l'on attend d'un tel appareil.

La présente invention atteint ce but par la
présence des caractères que la première revendication
annexée propose dans un dispositif électronique du type
en question, elle atteint également ce but par les mesures techniques définies, conformément à la cinquième
revendication annexée, comme spécifiques à une utilisation
du dispositif en question pour réaliser une unité détectrice-émettrice autonome de télé-alarme incendie; enfin, elle atteint semblablement le but en question par les caractères qu'elle propose, conformément à la 11ème revendication annexée, indépendante, pour constituer une unité formant un détecteur-émetteur autonome de télé-alarme incendie.

Les autres revendications annexées, dépendantes, illustrent des formes d'exécution ou des modes de mise en oeuvre particulièrement avantageuses du dispositif, de l'utilisation de ce dispositif, et de l'unité détectrice autonome de télé-alarme incendie précédemment mentionnée, ces formes d'exécution ou modes de mise en oeuvre présentant des avantages particulièrement intéressants notamment du point de vue de la simplicité de réalisation, de la fiabilité de fonctionnement et de la souplesse d'application dans des domaines de conditions différents.

Le dessin annexé illustre, à titre d'exemple, une forme d'exécution de l'objet de l'invention; dans ce dessin:

la fig. 1 est un schéma d'un circuit élévateur de tension apte à fonctionner à partir d'une très basse tension, qui illustre d'une façon générale la constitution d'un dispositif électronique conforme à l'invention destiné à rendre utilisable de façon autonome une source de très basse tension,

la fig. 2 est un schéma d'un circuit analogue à celui de la fig. 1, mais adapté pour une utilisation selon laquelle est constitué un détecteur-émetteur autonome de télé-alarme incendie,

la fig. 3 est un schéma analogue à celui de la fig. 2, illustrant une variante de composition du circuit électronique élévateur de tension à partir d'une très basse tension, compris dans le détecteur-émetteur autonome de télé-alarme incendie, et

la fig. 4 est une vue schématique en coupe d'un détecteur-émetteur autonome de télé-alarme incendie de faible encombrement et de faible coût, apte à être monté en un très grand nombre d'exemplaires pour assurer la surveillance incendie dans un espace très étendu.

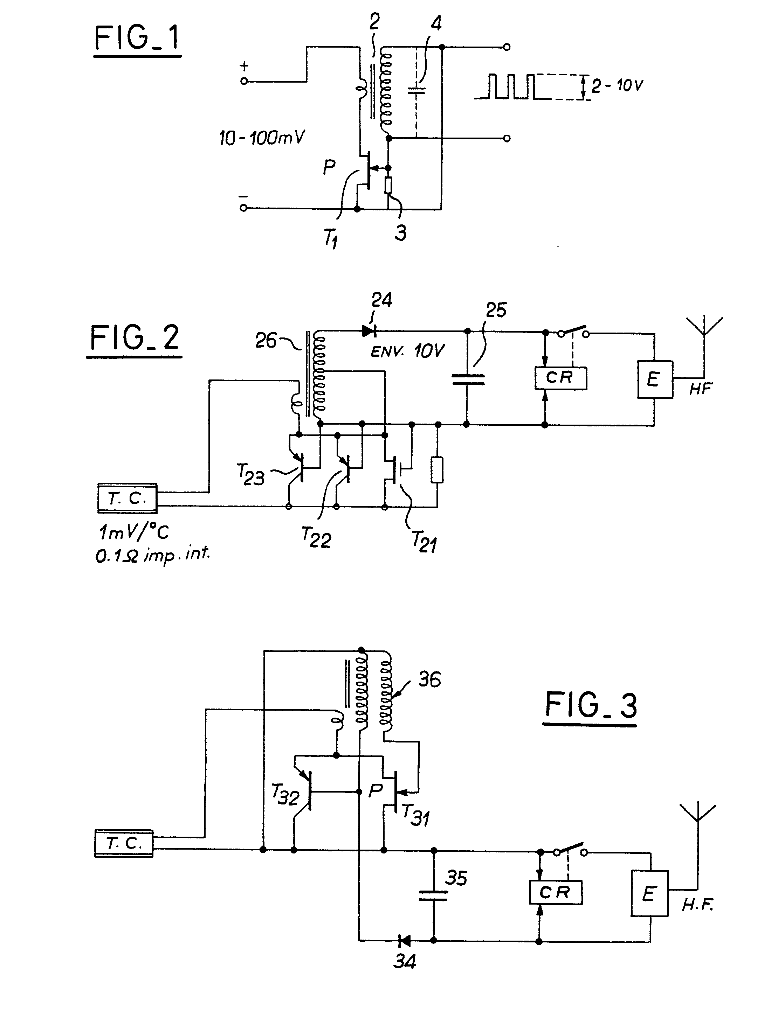

Le circuit de la fig. 1 comprend un transistor à effet de champ $T_1$, du type présentant une impédance source-drain non infinie pour une tension nulle sur l'électrode de commande. Le transistor représenté est à électrode de commande diffusée et non pas isolée, c'est-à-dire que son électrode de commande présente une impédance qui n'est jamais infinie mais qui est tout de même notablement plus élevée que celle d'un transistor bipolaire en régime d'amplification. Ce transistor $T_1$ pourrait également être un transistor à effet de champ à électrode de commande isolée. En série avec le tronçon source-drain du transistor $T_1$, se trouve branché l'enroulement primaire, à faible nombre de spires d'un transformateur dont l'enroulement secondaire, comportant un nombre de spires notablement plus élevé (typiquement 10 à 100 fois plus élevé) que l'enroulement primaire est branché entre le drain (mais ce pourrait également être la source) et l'électrode de commande du transistor $T_1$. Une résistance 3, de forte valeur est également branchée entre l'électrode de commande et le drain du transistor $T_1$.

A la fig. 1, on a encore représenté en pointillés un condensateur 4 qui représente en fait les capacités réparties du transistor et du bobinage secondaire du transformateur 2.

Le branchement série du tronçon source-drain du transistor $T_1$ et du bobinage primaire du transformateur 2 constitue le circuit d'entrée aux bornes duquel sera branchée une source de très faible tension continue, située typiquement dans le domaine de 6 à 200 mV. Si le rapport de transformation du transformateur 2 est adéquat, et si de plus les conditions de polarité voulues du transistor et du sens de branchement des enroulements du transformateur sont respectées, un signal présentant des pointes de tension typiquement situées entre 2 et 10 V apparaît aux bornes de l'enroulement secondaire du transformateur 2 dès qu'une très faible tension, de quelques dizaines de mV, voire encore plus faible, est appliquée aux bornes d'entrée, sur le circuit formé de l'enroulement primaire du transformateur 2 et du tronçon source-drain du transistor $T_1$. Ce signal de sortie, présentant des impulsions de tension situées dans un domaine de tensions pratiquement utilisable comme tension d'alimentation d'un appareil électronique, est représenté également à la fig. 1.

En fonctionnement, même la très faible tension appliquée au tronçon source-drain du transistor $T_1$ provoque au départ le passage d'un certain courant qui traverse l'enroulement primaire du transformateur 2. Le transistor $T_1$ peut être à canal P ou à canal N. S'il est à canal P, une tension négative sur son électrode de commande rend son canal davantage conducteur. L'augmentation de courant même minime provoque une tension notable dans l'enroulement secondaire. Si l'on admet que la moitié de la tension d'alimentation, c'est-à-dire au moins 5 mV, se présente aux bornes du primaire du transformateur, un rapport de 1 à 20 provoquera une variation de tension de 100 mV sur l'électrode de commande du transistor $T_1$. Cette tension, négative selon les polarités représentées à la fig. 1, diminuera la résistance depassage du tronçon source-drin du transistor, d'où nouvelle augmentation de courant entretenant et même augmentant la tension de commande, jusqu'au moment où le transistor se trouve pratiquement à l'état de saturation. Dès lors, le courant n'augmentant plus, la tension de commande diminue, faisant diminuer le courant, ce qui induit une tension de commande positive tendant à bloquer le transistor, ce dont résulte rapidement un blocage complet du transistor.

La rapidité de ce phénomène dépend des relations de self-
indication dans le transformateur 2, de même que de la
capacité répartie symbolisée par le condensateur 4.

En redressant, à l'aide d'un redresseur, les
impulsions de sortie du circuit selon la fig. 1, on peut
charger un condensateur qui présentera une tension susceptible de se situer dans un domaine de 2 à 10 V, selon
le rapport de transformation et selon la tension très
basse appliquée à l'entrée. Il est clair que la puissance
que l'on pourra prélever le cas échéant de ce condensateur dépendra de la puissance qui sera délivrée par la
source de très faible tension. On peut utiliser pour celle
ci par exemple un thermo-couple ayant une sensibilité de
1 mV/$^{O}$C, avec une impédance interne nettement inférieure
à 1 Ohm. Pour une différence de température située entre50
et 100$^{O}$, ce thermo-couple délivrera une tension située
entre 50 et 100 mV. La puissance prélevée sur le thermo-
couple dépendra quant à elle de la résistance minimum
présentée par le transistor au cours du fonctionnement.
A supposer que la résistance de passage du transistor
à l'état saturé puisse descendre à approximativement
1 Ohm, le courant de pointe délivré par le thermo-couple
sera de 50 mA pour 50 mV. La puissance maximum instantanée serait donc de 2'500 $\mu$W, c'est-à-dire 2,5 mW.
Naturellement, cette puissance n'est délivrée que durant
une partie du temps, de sorte que l'on peut compter, dans
les conditions susmentionnées, une puissance disponible
à la sortie de l'ordre de 1 mW ou d'une  fraction de mW.

Avec un transistor à effet de champ, pour des
conditions données concernant le transformateur, la tension de pointe des impulsions est pratiquement proportionnelle
à la très faible tension appliquée à l'entrée. Des résultats conformes à ce qui se trouve consigné à la fig. 1 (questions de polarités mises à part) ont été obtenus  en utilisant un transistor d'un
des types BSV 78, BSV 80, 2 N 4391, 2 N 4393, avec un transformateur réalisé sur une ferrite Philips du type RM 6, en donnant dix spires à l'enroulement primaire et approximativement 200 spires à l'enroulement secondaire.

Des essais ont été effectués avec différents types de transistors, à effet de champ à électrode de commande diffusée , à effet de champ à électrode de commande isolée, bipolaires. Les résultats sont à peu près équivalents avec les deux types de transistors à effet de champ; le seuil de tension d'entrée pour lequel l'oscillation s'amorce est légèrement plus bas avec un transistor à effet de champ à électrode de commande isolée, mais il ne dépasse de toute manière pas 10 mV même avec un transistor à effet de champ à électrode de commande diffusée (non isolée). Avec des transistors bipolaires, le même montage fonctionne mais les oscillations ne s'amorcent que difficilement.

Par ailleurs, avec un transistor bipolaire, l'amplitude des impulsions de sortie n'est plus proportionnelle à la très basse tension d'entrée, mais elle est donnée par l'effet de tension Zener du transistor bipolaire. Par contre, la largeur des impulsions, et donc l'énergie par cycle, augmente lorsque la tension d'entrée augmente. L'utilisation de transistors bipolaires peut avoir ceci d'intéressant qu'elle fournit à la sortie (après redressement de la tension et accumulation sur un condensateur) une tension pratiquement constante, quelle que soit la très basse tension d'entrée, à partir d'un certain seuil de celle-ci. Ainsi avec un transistor bipolaire, on peut obtenir que, pour une tension d'entrée inférieure à 60 mV, aucune tension de sortie ne se manifeste, tandis que pour une tension d'entrée dépassant 60 mV, une tension de sortie d approximativement 7 V, constante, se présente, sans augmenter au moment où la tension d'entrée augmente encore au-dessus de 60 mV. Dans certains cas, une telle forme d'exécution peut s'avérer fort intéressante. Toutefois, le seuil d'accrochage d'oscillation avec un transistor bipolaire peut dépendre de la rapidité de l'augmentation de la tension d'entrée; il peut même se produire qu'aucune oscillation n'intervienne pour moins de 100 mV de tension d'entrée, si cette dernière croît extrêmement lentement. Par contre,l'utilisation d'un transistor à effet de champ assure l'enclenchement automatique de l'oscillation dès que la tension d'entrée atteint l'ordre d'une dizaine de mV.

Pour obtenir une puissance de sortie de l'ordre de mW (ou de quelques dixièmes de mW), il faut que la résistance de saturation du transistor descende relativement bas, et ceci peut être obtenu au moins de deux manières différentes:

Premièrement, il est possible d'utiliser un transistor à effet de champ de puissance, du type V MOS ou du type D MOS, qui viennent d'apparaître sur le marché. Le cas échéant, on peut brancher plusieurs de ces transistors totalement en parallèle.

La seconde solution consiste à prévoir un transistor à effet de champ pour assurer le démarrage d'une oscillation et un ou plusieurs transistors bipolaires pour assurer la résistance de saturation suffisamment faible voulue, c'est-à-dire pour assurer la puissance désirée.

La fig. 2 représente le cas où l'on a un transistor à effet de champ à électrode de commande isolée $T_{21}$ et deux transistors bipolaires $T_{22}$ et $T_{23}$. A la fig. 2, on a représenté le schéma de l'ensemble d'une unité formant un détecteur-émetteur autonome de télé-alarme incendie, comprenant, outre le circuit considéré, un thermo-couple TC, un élément redresseur 24, un condensateur d'accumulation d'énergie 25, un commutateur relais de tension CR, et un émetteur radio E. Le transformateur 26 comporte cette fois un enroulement secondaire en deux parties, l'une destinée au fonctionnement de l'oscillateur et l'autre destinée à accroître la tension des
impulsions de sortie.

Dans le circuit élévateur de tension proprement
dit, les trois transistors $T_{21}$, $T_{22}$ et $T_{23}$ (le premier
à effet de champ à électrode de commande isolée de tpye
P et les deux autres bipolaires, de type PNP) sont
branchés entièrement en parallèle, c'est-à-dire que non
seulement les tronçons commandés (tronçon source-drain
pour le transistor à effet de champ, tronçon émetteur-
collecteur pour les transistors bipolaires) sont branchés en parallèle, mais les trois électrodes de commande
(base pour les transistors bipolaires, électrode de commande pour le transistor à effet de champ) sont également
connectés en commun à une extrémité de l'enroulement secondaire du transistor 26. L'expérience a montré que ce
montage était tout à fait adéquat; en l'absence de tension sur la base, les transistors bipolaires présentent
une impédance d'entrée de base très élevée, ce qui permet au transistor à effet de champ $T_{21}$ de faire démarrer
l'oscillation comme si les deux transistors bipolaires
n'existaient pas. Dès que l'oscillation a démarré, les
deux transistors bipolaires y participent et, par un choix
adéquat de ceux-ci, on peut aisément arriver à donner une
résistance de saturation globale de l'ordre de 1 Ohm ou
de quelques Ohms aux trois tronçons commandés qui sont
branchés en parallèle.

On remarque que l'autre extrémité de l'enroulement secondaire du transformateur est cette fois connectée à la source du transistor $T_{21}$ et non plus à son
drain. Compte tenu de ce que la tension source-drain est
toujours extrêmement faible, ce changement n'a aucune
importance.

le condensateur 25, branché sur une sortie d'enroulement
surélévatrice de tension, est chargé par l'intermédiaire de la diode 24 à une tension encore supérieure à celle des impulsions sur
l'électrode de commande des transistors. De ce fait, le condensateur

25 peut accumuler une certaine énergie sous une tension continue d'approximativement 10 V. La présence des transistors bipolaires interdira une augmentation de cette tension notablement au-dessus de cette valeur.

On voit à la fig. 2 que, aux bornes du condensateur 25, se trouve monté un commutateur-relais de test de tension CR. Ce commutateur-relais, d'un type connu dans l'art de l'électronique, établit un contact lorsque la tension à ses bornes atteint une certaine valeur et rompt ce contact lorsque cette tension descend à une certaine fraction K de cette valeur. Ce relais est à très haute impédance et ne consomme pratiquement pas de courant lorsque sa sortie n'est pas passante, de sorte que la charge du condensateur 25 par les impulsions de l'élévateur de tension ne s'en trouve pas gênée. En aval du tronçon de commande du commutateur-relais CR se trouve branché un circuit émetteur-radio E, d'un type connu, émettant un signal à haute fréquence.

Ce circuit émetteur est fait pour fonctionner sous une tension normale donnée $U_n$, par exemple 10 V, et il fonctionne encore convenablement jusqu'à ce qu'il soit alimenté par une fraction $KU_n$ de cette tension nominale (par exemple 6 V). C'est à ces deux tensions que le commutateur relais de tension CR est adapté, de sorte qu'il branche l'alimentation de l'émetteur E lorsque le condensateur 25 présente une tension d'approximativement 10 V puis la supprime lorsque la tension sur ce condensateur, diminuant par suite de la décharge du condensateur pour alimenter l'émetteur, atteint une valeur d'approximativement 6 V.

Si l'émetteur E fonctionne dansle domaine des fréquences supérieures à 50 MHz, et s'il est muni d'une antenne convenablement établie, il pourra émettre un signal ayant une portée de l'ordre de 1 Km en consommant une puissance d'alimentation de l'ordre de 100 mW. Si la puissance délivrée par ailleurs d'une façon continue par le thermo-couple sur le condensateur 25, par l'intermédiaire de l'agencement élévateur de tension est de l'ordre de 1 mW, l'émetteur E fonctionnera pendant un certain temps puis sera hors de fonctionnement pendans un
temps approximativement 100 fois plus long. On peut, donnant au condensateur 25 une valeur de l'ordre de 100  F,
prévoir un fonctionnement de l'émetteur durant 10 ms
approximativement toutes les dix secondes.En donnant au condensateur 25 une capacité notablement plus élevée, on
pourra par exemple obtenir des périodes d'émission
de quelques dixièmes de seconde, séparée par
des intervalles de 30 à 90 sec.

Avantageusement, l'émetteur E émettra des ondes
portant une modulation de code permettant de reconnaître
un émetteur particulier parmi un grand nombre d'émetteurs
semblables dont chacun émet avec une modulation codée d'
une façon particulière à l'émetteur.

La fig. 3 représente le schéma d'une variante
de la forme d'exécution selon la fig. 2. Le thermo-couple
TC, le commutateur-relais CR et l'émetteur E sont identiques à ceux de la fig. 2. Par contre, l'agencement
élévateur de tension comprend cette fois un transistor
à effet de champ à électrode de commande diffusée $T_{31}$,
à canal P, et un transistor bipolaire $T_{32}$, du type PNP.
A nouveau, les tronçons commandés des deux transistors
sont branchés en parallèle, pour être ensemble mis en
série avec l'enroulement primaire du transformateur 36.
Ce dernier comprend par contre deux enroulements secondaires dont l'un est connecté à l'électrode de commande
du transistor à effet de champ $T_{31}$ et dont l'autre est
commandée à la base du transistor bipolaire $T_{32}$. Les deux
enroulements secondaires ont approximativement le même
nombre de spires, valant 10 à 20 fois le nombre de spires
de l'enroulement primaire. Dans ce montage, le transistor
bipolaire peut être à très grande capacité et pourrait
même présenter une impédance de base relativement peu élevée, sans que l'amorçage de l'oscillation dans le transistor à effet de champ $T_{31}$ soit mis en danger. En effet, une impédance relativement basse de la base du transistor bipolaire ne saurait court-circuiter la tension de commande sur l'électrode de commande du transistor bipolaire.

Ici, le retour des enroulements secondaires a été établi sur les électrodes négatives des transistors, c'est-à-dire sur le drain du transistor à effet de champ $T_{31}$ et le collecteur du transistor bipolaire $T_{32}$. On a par ailleurs placé la diode redresseuse 34 du côté de l'enroulement secondaire raccordé à la base du transistor bipolaire et non pas de l'autre côté, comme dans la fig.2.

L'appareil selon cette fig. 3 fonctionne d'une façon similaire à l'appareil selon la fig. 2, cette fig. 3 a principalement pour but d'illustrer les nombreuses variantes selon lesquelles le genre "d'oscillateur blocking" constituant le circuit élévateur de tension peut être réalisé.

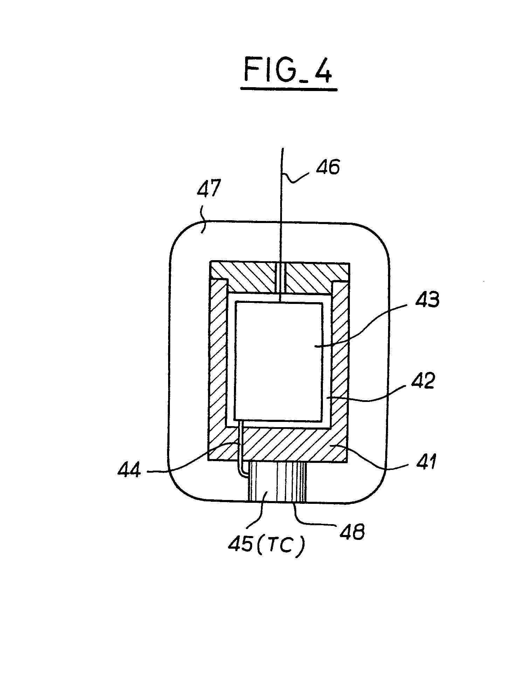

La fig. 4 représente en coupe schématique une manière particulièrement avantageuse de réaliser concrètement le détecteur émetteur autonome de télé-alarme incendie fonctionnant de la manière illustrée par les schémas des fig. 2 et 3.

Un boîtier métallique 41, servant de source froide au thermo-couple détecteur 45 (TC des fig. 2 et 3) présente une masse suffisante pour assurer, par sa capacité thermique une montée lente de la température interne lorsque l'appareil se trouvera dans les flammes d'un incendie. Un boîtier intérieur isolant 42 enferme tous les composants électroniques représentés au schéma des fig. 2 ou 3, en un ensemble 43. Le thermo-couple 45 alimente tout l'agencement électronique intérieur par l'intermédiaire d'un câble de connexions à deux conducteurs 44. Une antenne 46 reliée au bloc électronique 43 traverse de façon isolée le boîtier métallique 41, de même qu'un revêtement extérieur de matière plastique isolante 47, pour se projeter vers l'extérieur d'une façon adéquate pour l'émission radio. Une masse d'enrobage de matière isolante 47 joue le rôle d'un bouclier thermique et évite l'échauffement de l'intérieur de l'appareil. Seule une face active 48 du thermo-couple 45 apparaît vers l'extérieur, à fleur de la surface extérieure du bouclier thermique 47. En cas d'incendie, ce bouclier thermique maintient le boîtier intérieur 41 et l'électronique 43 à une température relativement basse, de sorte que, sous l'effet de la différence de température entre sa face en contact avec le boîtier métallique 41 et sa face tournée vers l'extérieur, le thermo-couple 45 fournit une tension continue à l'électronique 43, laquelle répond à cela en provoquant l'émission intermittente d'un signal radio codé, de la façon expliquée en liaison avec la fig. 2. La portée radio d'un tel émetteur de télé-alarme est d'approximativement 1 Km. En répartissant des dispositifs tels que celui que représente la fig. 4 d'une façon très dense dans une forêt courant des risques d'incendie, on pourra se contenter d'établir seulement un petit nombre de relais, relativement bien accessibles et alimentés par une source d'énergie particulière, chaque relais retransmettant les éventuels signaux provenant des différentes unités de détection d'émission d'alarme, ayant chacune un codage particulier. Les relais pourront être approximativement 100 fois moins nombreux que les unités détectrices émettrices de télé-alarme. Un poste de surveillance central recevra les signaux des différentes stations relais et pourra aisément, grâce au code des signaux qui lui seront retransmis, localiser l'endroit où, le cas échéant, un incendie aura débuté.

Les unités détectrices-émettrices, robustes, étanches et autonomes nécessitent aucun entretien. Un passage par de tels détecteurs autonomes simples, ne nécessitant que peu de relais devant être alimentés en énergie et pouvant être disposés en des endroits facilement accessibles pour leur entretien permet une forte densité de points de mesure ou de détection, forte densité qui seule permet d'assurer efficacement la protection des forêts à l'égard de l'incendie, passant par une détection très rapide de tout foyer d'incendie naissant.

Le dispositif proposé, pour rendre utilisable de façon autonome une source de très faible tension, peut trouver également de nombreux autres emplois, dans toutes les circonstances où il est nécessaire de connaître, au moins par intermittence, des valeurs de divers paramètres en des endroits difficilement accessibles. Une unité semblabe à celle qui vient d'être décrite, mais réalisée en de beaucoup plus petites dimensions et ne devant avoir qu'une portée d'émission très restreinte, serait par exemple très utile sur une partie mobile de moteur pour signaler une élévation de température trop importante, ou un gradient de température trop élevé entre deux points, sans que cette détection requiert une liaison matérielle directe, toujours difficileà établir et sujette à perturbations.

On pourrait également songer à utiliser des micro-sondes du type en question pour l'étude de différents phénomènes à l'intérieur du corps humain ou du corps d'un animal. Dans ce cas, on utiliserait comme source de très basse tension, des capteurs bio-électriques. Bien que ces derniers ne puissent fournir que des courants également très faibles, la réalisation d'une unité adéquate ultra-miniature serait possible compte tenu du fait que la puissance d'émission pourrait être extrêmement réduite. En effet, des récepteurs très sensibles placés à la surface d'un corps vivant dans lequel de telles sondes auraient été introduites sont capables d'appréhender des émissions haute fréquence d'une fraction de nW,

0025725

voire même de quelques pW.

On pourrait également placer des capteurs autonomes dans des endroits dont la radioactivité devrait
être testée.

D'une façon générale, le dispositif électronique
décrit permet d'utiliser comme source d'énergie pour divers agencements électroniques tout capteur délivrant seu
lement une très faible tension (quelques mV  de préférence mais non obligatoirement à faible impédance.

18

0025725

<u>REVENDICATIONS</u>:

1. Dispositif électronique pour rendre utilisable de façon autonome une source de très faible tension, caractérisé en ce qu'il comprend un agencement oscillateur formé d'au moins un transistor et un bobinage à deux enroulements dont l'un comporte plus de spires que l'autre de façon qu'ils aient entre eux un rapport de transformation élevé, l'enroulement qui a le plus petit nombre de spires étant branché en série sur le tronçon commandé du transistor et l'autre enroulement étant branché, pour appliquer la tension qui s'y trouve induite, entre l'électrode de commande et une autre électrode du transistor, le montage série de l'enroulement à petit nombre de spires et du tronçon commandé du transistor étant agencé pour recevoir la dite très faible tension, l'enroulement à grand nombre de spires ou un troisième enroulement, à grand nombre de spires également, étant agencé pour délivrer des impulsions de tension dont l'amplitude atteint la valeur d'une tension utilisable pour faire fonctionner un émetteur radio ou un autre appareillage électronique, le dispositif étant exempt de toute source d'énergie électrique autre que la dite source de très faible tension.

2. Dispositif selon la revendication 1, caractérisé en ce que le dit agencement oscillateur comprend au moins un transistor à effet de champ d'impédance source-train non infinie pour une tension source-électrode de commande nulle.

3. Dispositif selon la revendication 2, caractérisé en ce qu'il comprend au moins un transistor a effet de champ de puissance dont le tronçon source-drain présente à l'état passant, une résistance propre inférieure à 10 ohms.

4. Dispositif selon la revendication 2, caractérisé en ce que ledit agencement oscillateur comprend également au moins un transistor bipolaire pour fournir une

19 0025725

impédance globale inférieure à 10 ohms en état de saturation.

5. Utilisation du dispositif selon la revendication 1 pour réaliser une unité détectrice-émettrice autonome de télé-alarme incendie, caractérisée en ce que, dans cette unité qui englobe le dispositif électronique, on branche un thermo-couple en tant que dite source de très faible tension, en ce qu'on branche, au moyen d'un organe redresseur, un condensateur pour recueillir l'énergie de chaque dite impulsion de tension, ce condensateur recevant ainsi une puissance $P_f$, et en ce qu'on dispose un circuit émetteur radio, de façon qu'il fonctionne en étant seulement alimenté par le dit condensateur, d'une façon continue ou d'une façon périodique chaque fois que le dit condensateur a acquis une tension suffisante, le fonctionnement ayant lieu chaque fois pendant la durée d'une décharge de ce condensateur.

6. Utilisation selon la revendication 5, caractérisé en ce qu'on emploie un thermo-couple ayant une sensibilité de l'ordre de 1 mV/°C et une impédance interne inférieure à 1 Ohm, et en ce que, dans le dit dispositif englobé par la dite unité, on emploie pour l'agencement oscillateur au moins un transistor à effet de champ non totalement bloqué en l'absence de tension de commande qui constitue un transistor à effet de champ de puissance ou qui est associé à un transsitor à effet de champ de puissance, ou qui est associé à un certain nombre de transistors bipolaires, les tronçons commandés de tous les transistors, à effet de champ et/ou bipolaires, étant en parallèle et leur nombre étant suffisant pour que l'impédance résultante de tous les tronçons commandés des transistors à l'état de saturation soit de l'ordre de 1 Ohm, de façon que la puissance $P_f$ avec laquelle on fournit de l'énergie électrique, sous une tension dépassant l'ordre de 2 V, au dit condensateur, pour le dit circuit oscillant émetteur, soit de l'ordre d'au moins 1 mW lorsque la différence de température sur le thermo-couple est d'au moins environ 50°C.

7. Utilisation selon la revendication 5 ou la revendication 6, caractérisée en ce qu'on emploie pour le dit circuit émetteur radio, un circuit émetteur à haute fréquence muni d'une antenne lui donnant une portée de l'ordre d'un kilomètre, l'oscillation de l'émetteur étant modulée selon un code permettant, à la réception, de reconnaître cet émetteur parmi d'autres, cet émetteur consommant une puissance instantanée $P_c$, valant un certain nombre de mW, sous une tension nominale $U_n$ située entre 2 V et 10 V, l'émetteur étant capable de fonctionner encore sous une tension réduite $K \cdot U_n$ valant 0,6 à 0,7 de cette tension nominale, et le dit condensateur étant dimensionné pour fournir, au cours d'une période de décharge diminuant sa tension un rapport de 1 à K, la puissance de l'ordre $P_c$ à $K^2 \cdot P_c$ nécessaire au fonctionnement de l'émetteur, durant une période d'émission $T_{em}$ d'au moins 10 ms, les périodes d'émission se succédant ainsi avec une cadence de répétition d'environ $T_{em} \cdot P_c / P_f$.

8. Utilisation selon la revendication 7, caractérisée en ce qu'on emploie un condensateur ayant une capacité suffisante pour que la dite période d'émission dure plusieurs dixièmes de seconde.

9. Utilisation selon l'une des revendications 5 à 8, caractérisée en ce que l'on dispose entre le dit condensateur et le dit circuit émetteur radio un agencement de commutation électronique, à consommation quasi nulle à l'état non passant, et qui branche la tension du condensateur pour alimenter l'émetteur radio lorsque la tension sur le condensateur atteint la valeur de la tension nominale de fonctionnement de l'émetteur radio et coupe cette tension d'alimentation lorsque la tension sur le condensateur est tombée à une fraction de cette valeur de tension nominale, encore juste suffisante pour faire fonctionner l'émetteur-radio.

10. Utilisation selon l'une des revendications 5 à 9, caractérisée en ce que l'on loge tous les composants de l'agencement oscillateur, l'élément redresseur, le condensateur, et les composants du circuit émetteur radio avec au moins un élément actif, à l'intérieur d'un boîtier métallique ayant une grande inertie thermique et qui est entouré d'une masse isolante formant bouclier thermique, et en ce qu'on dispose le dit thermo-couple, ayant une forme de capsule, dans l'épaisseur du bouclier thermique, de façon qu'une de ses faces actives soit en contact avec le boîtier métallique et que l'autre de ses faces actives soit exposée vers l'extérieur, pour former un détecteur-émetteur radio autonome d'alarme incendie qui soit compact et présente vers l'extérieur seulement la surface extérieure du bouclier thermique, une face active de thermo-couple et l'antenne formée d'un fil conducteur émergeant du bouclier thermique.

11. Unité formant un détecteur-émetteur autonome de télé-alarme incendie, comprenant un organe thermo-couple délivrant une très faible tension à très basse impédance, à l'exclusion de toute autre source d'énergie électrique, caractérisée en ce qu'elle comprend:

- un agencement oscillateur formé d'un ou plusieurs transistors dont aumoins un à effet de champ, les tronçons commandés de tous les transistors étant en parallèle, et d'un bobinage à aux moins deux enroulements ayant des nombres de spires différents de façon qu'ils aient entre eux un rapport de transformation élevé, l'enroulement qui a le plus petit nombre de spires étant branché en série sur le tronçon commandé des transistors et l'enroulement à grand nombre de spires étant branché pour appliquer la tension qui s'y trouve induite entre l'électrode de commande des transistors et une autre électrode de ceux-ci, le dit organe thermo-couple étant branché aux extrémités du montage série de l'enroulement à petit nombre de spires et du tronçon commandé des transistors, et chaque enroulement à grand nombre de spires étant agencé pour présenter des impulsions de tension ayant l'amplitude d'une tension utilisable,

- un condensateur et un élément redresseur branchant ce condensateur sur un dit enroulement à grand nnombre de spires pour accumuler sur ce condensateur l'énergie électrique de chaque dite impulsion de tension,

- un circuit émetteur radio comprenant au moins un élément actif ayant une tension nominale d'alimentation $U_n$ et fonctionnant encore en étant alimenté par une fraction déterminée $K_{Un}$ de cette tension nominale,

- un agencement commutateur électronique, à consommation quasi nulle à l'état non passant, branché entre le dit condensateur et le dit émetteur radio et enclenché pour connecter ce dernier au dit condensateur pour alimenter l'émetteur radio lorsque la tension sur le condensateur atteint la dite tension nominale $U_n$ et pour déconnecter l'émetteur radio du condensateur lorsque la tension sur le condensateur descend à la dite fraction déterminée $KU_n$ de la dite tension nominale, le dit émetteur étant muni d'un circuit à haute fréquence et d'une antenne lui donnant une portée de l'ordre d'un kilomètre et étant agencé pour que son oscillation soit modulée selon un code permettant, à la réception, de reconnaître cet émetteur parmi d'autres,

- tous les composants de l'agencement oscillateur, l'élément redresseur, le condensateur et les composants de l'émetteur radio étant logés à l'intérieur d'un boîtier métallique ayant une grande inertie thermique et qui est entouré d'une masse isolante formant bouclier thermique, le dit thermo-couple, qui a une forme de capsule, étant disposé dans l'épaisseur du bouclier thermique de façon qu'une de ses faces actives soit en contact avec le boîtier métallique et que l'autre de ses faces actives soit exposée vers l'extérieur, de façon que le tout forme une unité compacte présentant vers l'extérieur seulement la surface extérieure du bouclier thermique, une face active de thermo-couple, et l'antenne formée d'un fil conducteur émergeant du bouclier thermique.

12. Unité selon la revendication 11, dans laquelle le dit thermo-couple a une sensibilité de l'ordre de 1 mV/$^{\circ}$C et une impédance interne inférieure à 1 Ohm, caractérisée en ce que le nombre et la puissance des dits transistors à effet de champ ou bipolaires, dont les tronçons commandés se trouvent en parallèle, sont suffisant pour que l'impédance résultante de tous les tronçons commandés des transistors à l'état de saturation soient de l'ordre de 1 Ohm, de façon que la puissance $P_f$ avec laquelle l'énergie électrique est fournie, sous une tension dépassant l'ordre de 2 V, au dit condensateur, pour l'alimentation intermittente du dit émetteur radio, soit de l'ordre de 1 mW lorsque la différence de température entre les deux faces du thermo-couple est d'au moins environ 50$^{\circ}$C, et en ce que le dit émetteur radio consomme une puissance instantanée $P_c$, valant un certain nombre de mW, la dite tension nominale $U_n$ de fonctionnement de l'émetteur radio se situant entre 2 et 10 V et la dite fraction déterminée $KU_n$ de cette tension nominale étant de l'ordre de 2/3 $U_n$, ledit condensateur étant dimensionné pour fournir, au cours d'une période de décharge diminuant sa tension dans un rapport de 1 à K, la puissance nécessaire au fonctionnement de l'émetteur durant une période d'émission $T_{em}$ d'au moins 10 ms, les périodes d'émission se succédant ainsi avec une cadence de répétition d'environ $T_{em} \cdot P_c/P_f$.

13. Unité selon la revendication 12, caractérisée en ce que ledit condensateur est dimensionné, compte tenu d'une puissance $P_c$ consommée pour le dit émetteur radio de l'ordre de 100 mW, pour donner à la dite période d'émission $T_{em}$ une durée située dans le domaine de 50 à 100 ms et à la dite cadence de répétition une valeur située dans le domaine de 10 à 60 sec.

FIG_1

FIG_2

FIG_3

0025725

## FIG_4